# DEMANDE DE BREVET EUROPEEN

(11) **EP 3 812 273 A1**
(43) Date de publication de la demande: **28.04.2021**
(21) Numéro de dépôt: 20203229.8
(22) Date de dépôt: 22.10.2020
(51) Int. Cl.: B64D 11/06

(54) **CABINE D'AÉRONEF MUNIE D'UN DISPOSITIF DE SÉCURITÉ ET PROCÉDÉ ASSOCIÉ**

(30) Priorité: 23.10.2019 FR 1911839
(71) Demandeur: Dassault Aviation, 75008 Paris (FR)
(72) Inventeur: GERME, Lionel, 33701 MERIGNAC (FR); PICUT, Emmanuel, 33701 MERIGNAC (FR); LEVAVASSEUR, Alain, 33701 MERIGNAC (FR); BOULO, Erwan, 33701 MERIGNAC (FR); GUERARD, Jérémie, 33701 MERIGNAC (FR)
(74) Mandataire: Lavoix

(57) **Abrégé**

La cabine (12) comprend :
- au moins un siège (14) propre à recevoir au moins un passager (20) ;
- au moins une table (16) disposée en regard du siège (14) ;
- un dispositif de sécurité (40) propre à être monté sur la table (16), sous la table (16) ou reçu dans la table (16).

Le dispositif de sécurité (40) comporte :
- un ensemble déployable de protection comportant un coussin gonflable (54, 54A) déployable depuis une configuration rétractée de repos vers une configuration déployée de sécurité, et
- un système de commande du déploiement du ou de chaque coussin gonflable (54, 54A), propre à déclencher le déploiement du coussin gonflable (54, 54A) au-delà d'une valeur seuil de décélération de l'aéronef.

## Description

La présente invention concerne une cabine d'aéronef comprenant :
- au moins un siège propre à recevoir au moins un passager ;
- au moins une table disposée en regard du siège ;
- un dispositif de sécurité propre à être monté sur la table, sous la table ou reçu dans la table.

Une telle cabine constitue un aménagement à bord d'un aéronef, plus particulièrement d'un avion d'affaires, destiné à améliorer la sécurité des passagers, tout en accélérant et en simplifiant la certification des sièges d'aéronef dans la cabine.

Dans les avions d'affaires, les sièges des passagers peuvent être disposés en regard d'une table permettant de travailler et/ou de se restaurer en cours de vol. Pour assurer la sécurité des passagers assis en regard de la table durant les phases de roulage, décollage et atterrissage de l'avion (« TTOL : Taxi Take Off Landing » en anglais), des matelas de protection en mousse, dénommés « crash-pads » en anglais, sont disposés sur la table. Ces matelas minimisent le risque de blessures du passager sur la table, en cas de forte décélération de l'avion (par exemple en cas de freinage d'urgence). La présence de ce matelas peut constituer une exigence pour la certification de l'aéronef.

Cependant, ces matelas de protection présentent de nombreux inconvénients. Ils sont volumineux et leur rangement dans des placards de la soute nécessite une place importante à bord de l'aéronef. L'équipage commercial doit en outre les manipuler au début et à la fin de chaque phase de vol (roulage, décollage et atterrissage), ce qui est fastidieux et dérangeant pour les passagers, et rajoute de la charge de travail à l'équipage lors de la préparation de la cabine.

Enfin, la certification de sièges de plus en plus confortables à bord des avions, et donc de plus en plus lourds, requiert des solutions de sécurité plus adaptées dès lors que les sièges font face à une table. Ceci augmente le nombre et la durée des tests de vérification de la protection des passagers à mener jusqu'à l'obtention de la certification et engendre donc des impacts sur les plannings et sur les coûts de constructions des avions. En outre, la certification de sièges plus confortables avec une table maintenue en position haute peut être incertaine en l'absence de solutions de sécurité nouvelles.

Pour le confort et la satisfaction des passagers, la configuration table haute est préférable durant la totalité du vol.

Un but de l'invention est de fournir un aménagement de cabine d'aéronef comportant au moins un siège, disposé en regard d'une table pouvant être maintenue en permanence en position haute, dans lequel la sécurité du passager présent dans le siège est améliorée lors des phases de roulage, décollage et atterrissage, conformément aux exigences de certification.

A cet effet, l'invention a pour objet une cabine d'aéronef du type précité, caractérisée en ce que le dispositif de sécurité comporte :
- au moins un ensemble déployable de protection comportant un coussin gonflable déployable depuis une configuration rétractée de repos vers une configuration déployée de sécurité du ou de chaque passager assis sur le siège, et
- un système de commande du déploiement du ou de chaque coussin gonflable, propre à déclencher le déploiement du coussin gonflable au-delà d'une valeur seuil de décélération de l'aéronef.

La cabine selon l'invention peut comprendre l'une ou plusieurs des caractéristiques suivantes, prise(s) isolément ou suivant toute combinaison techniquement possible :
- la table comporte un plateau ;
- l'ensemble déployable de protection est propre à être monté sur le plateau ou reçu dans le plateau ;
- au moins un ensemble déployable de protection est reçu dans l'épaisseur du plateau de la table ;
- au moins un ensemble déployable de protection est monté sous le plateau de la table ;
- le plateau comprend une base et au moins un volet mobile par rapport à la base entre une configuration de rangement dans laquelle le volet est replié sur la base et une configuration d'utilisation dans laquelle le volet est déployé dans le prolongement de la base ;
- au moins un ensemble déployable de protection est reçu dans l'épaisseur du volet de la table ;
- le volet comprend un revêtement en mousse fixé sur le volet, au moins un ensemble déployable de protection étant reçu dans le revêtement en mousse ;
- le dispositif de sécurité comporte un matelas de protection amovible propre à être monté sur la table, au moins un ensemble déployable de protection étant reçu dans le matelas de protection et ;
- il comprend un premier siège orienté dans un sens normal de déplacement de l'aéronef, et un premier ensemble déployable de protection monté face au premier siège, le premier ensemble déployable de protection comprenant un premier coussin gonflable se déployant au-dessus de la table pour protéger le torse et la tête d'un passager assis dans le premier siège, la cabine comprenant un deuxième siège orienté dans un sens opposé au sens normal de déplacement de l'aéronef et un deuxième ensemble déployable de protection monté face au deuxième siège, le deuxième ensemble déployable de protection comprenant un deuxième coussin gonflable se déployant en-dessous de la table pour protéger les membres inférieurs d'un passager assis sur le deuxième siège ;
- le deuxième coussin gonflable se déploie vers le bas sans faire saillie verticalement au-dessus et en regard du plateau ;
- le deuxième coussin gonflable en configuration déployée présente une première région disposée sous le plateau, avantageusement au contact d'une surface inférieure du plateau et une deuxième région disposée en regard d'une tranche périphérique du plateau, avantageusement en contact avec la tranche périphérique du plateau ;
- le deuxième coussin gonflable en configuration déployée présente une forme de haricot ;
- le premier coussin gonflable se déploie vers le haut, en faisant saillie verticalement au-dessus et en regard du plateau, avantageusement sans faire saillie verticalement en-dessous et en regard du plateau ;
- la table définit ou porte un logement de réception du dispositif de sécurité et comporte un capot de fermeture du logement définissant une partie d'une surface extérieure de la table ;
- le dispositif de sécurité comporte un boîtier recevant le coussin gonflable et un système de gonflage du coussin gonflable ;
- le système de commande comporte une batterie propre à alimenter électriquement le système de gonflage ou le système de commande comporte une connexion électrique d'alimentation reliée à un système d'alimentation électrique de l'aéronef et au système de gonflage ;
- le système de commande du déploiement du coussin gonflable est reçu dans le boîtier ;
- le système de commande comporte un dispositif de détection de décélération et un processeur propre à analyser des mesures de décélération prises par le dispositif de détection pour activer le déploiement du coussin gonflable lorsque la décélération mesurée par le dispositif de détection est supérieure à la valeur seuil ; et
- l'ensemble déployable de protection est monté à demeure sur la table, à demeure sous la table ou est reçu à demeure dans la table ;
- la table est maintenue en permanence dans un plan parallèle au plancher de la cabine ;
- la table est maintenue en position haute pendant les phases de roulage, décollage et atterrissage de l'aéronef ;
- la table comprend un plateau, le plateau comprend au moins une base s'étendant en permanence dans un plan parallèle à un plancher de la cabine, le plan de la base étant horizontal lorsque l'axe longitudinal de l'aéronef est horizontal ;
- en position haute, la base est disposée au-dessus et à l'écart d'un plancher de la cabine ;
- la table est montée sur un plancher de la cabine ;
- la table comprend au moins un pied et un plateau soutenu par le ou par chaque pied ;
- le ou chaque pied est fixé sur un plancher de la cabine ;
- la table comprend un plateau fixé sur un garnissage latéral de la cabine ;
- la table est disposée sans liaison mécanique avec le ou chaque siège en regard duquel la table est disposée ;
- la table est une table à manger ou/et à travailler (désignée par le terme « dining table » en anglais) ;
- la table n'est pas liée mécaniquement à un siège de la cabine.

L'invention a également pour objet un procédé de protection d'un passager d'un aéronef comprenant les étapes suivantes :
- installation d'au moins un passager dans un siège d'une cabine d'aéronef telle que définie plus haut ;
- détection par le système de commande d'une décélération de l'aéronef dépassant une valeur seuil de décélération ;
- déploiement du ou de chaque coussin gonflable dans l'espace en regard du ou de chaque passager, entre le siège et la table.

La cabine selon l'invention peut comprendre l'une ou plusieurs des caractéristiques suivantes, prise(s) isolément ou suivant toute combinaison techniquement possible :
- maintien en permanence de la table dans un plan parallèle à un plancher de la cabine ;
- maintien de la table en position haute durant les phases de roulage, décollage et atterrissage de l'aéronef.

L'invention sera mieux comprise à la lecture de la description qui va suivre, donnée uniquement à titre d'exemple, et faite en se référant aux dessins annexés, sur lesquels :
- **[****Fig 1****]** la figure 1 est une vue de côté, partiellement en coupe longitudinale, d'une première cabine d'aéronef selon l'invention ;
- **[****Fig 2****]** la figure 2 est une vue analogue à la figure 1, lorsque le coussin gonflable est déployé ;
- **[****Fig 3****]** la figure 3 est une vue de face, partiellement en coupe transversale, de la cabine illustrée figure 1, lorsque les coussins gonflables sont déployés ;
- **[****Fig 4****]** la figure 4 est une représentation schématique d'un premier boîtier du dispositif de sécurité selon l'invention ;
- **[****Fig 5****]** la figure 5 est une vue représentant une variante de la cabine selon l'invention ;
- **[****Fig 6****]** la figure 6 illustre une première variante du boîtier du dispositif de sécurité selon l'invention, représenté sur la figure 4 ;
- **[****Fig 7****]** la figure 7 illustre une seconde variante du boîtier du dispositif de sécurité selon l'invention représenté sur la figure 4 ;
- **[****Fig 8****]** la figure 8 illustre une autre variante de cabine d'aéronef selon l'invention ;
- **[****Fig 9****]** la figure 9 illustre une autre variante de cabine d'aéronef selon l'invention ;
- **[****Fig 10****]** la figure 10 illustre une autre variante de cabine d'aéronef selon l'invention ;
- **[****Fig 11****]** la figure 11 illustre une autre variante de cabine d'aéronef selon l'invention ;
- **[****Fig 12****]** la figure 12 illustre une autre variante de cabine d'aéronef selon l'invention ; et
- **[****Fig 13****]** la figure 13 est une vue analogue à la figure 12, lorsque les coussins gonflables sont déployés.

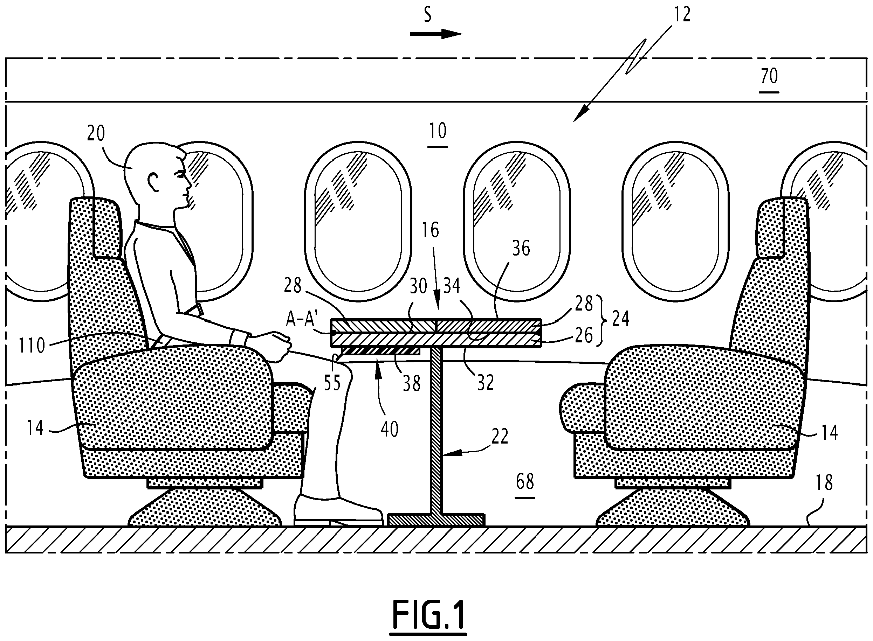

Les figures 1 à 4 illustrent une première cabine 12 d'aéronef 10 selon l'invention. L'aéronef 10 est en particulier un avion d'affaires. Par « avion d'affaires », on entend notamment un avion présentant une masse totale au décollage inférieure à 55000 kg (121000 livres). Un avion d'affaires est généralement certifié pour transporter moins de 25 passagers, notamment moins de 21 passagers.

La cabine 12 de l'aéronef 10 s'étend de l'arrière de l'aéronef 10 vers l'avant de l'aéronef 10 selon le sens normal de déplacement de l'aéronef suivant la flèche S. La cabine 12 comporte au moins un siège 14 et au moins une table 16.

La cabine 12 comporte en outre, en regard d'au moins un siège 14 orienté dans le sens S, un dispositif de sécurité 40, propre à protéger un passager 20 assis dans le siège 14 d'un choc contre la table 16, en cas de décélération brusque de l'aéronef. Dans l'exemple particulier de la figure 1, deux sièges 14 sont représentés, situés de part et d'autre d'une table 16.

Dans cet exemple le siège 14 comporte une assise et un dossier pouvant recevoir un seul passager. Dans une variante (non représentée), le siège 14 comporte une assise montée sur le plancher de l'aéronef et un dossier pouvant accueillir plusieurs passagers. Dans une autre variante (non représentée), le siège 14 présente une assise commune et plusieurs dossiers, chaque dossier accueillant un passager.

Les sièges 14 ainsi que la table 16 sont montés sur le plancher 18 de l'aéronef 10.

Sur la figure 1, un siège 14 accueille un passager 20. Chaque siège 14 est monté en regard de la table 16.

Chaque siège 14 comporte une ceinture de sécurité 110. Dans l'exemple représenté sur les figures, chaque ceinture de sécurité 110 est attachée par deux points au siège 14 sur lequel elle est montée. En particulier, toutes les ceintures 110 sont des ceintures ventrales qui ne comportent pas de brin d'épaule.

Dans une variante non représentée, au moins une ceinture de sécurité 110 est attachée par trois points au siège 14 sur lequel elle est montée, et comprend une ceinture ventrale et un brin d'épaule.

La table 16 est propre à être utilisée pendant toute la durée du vol par le passager 20 afin de travailler ou se restaurer par exemple. Elle occupe avantageusement durant toute la durée du vol une position haute d'utilisation.

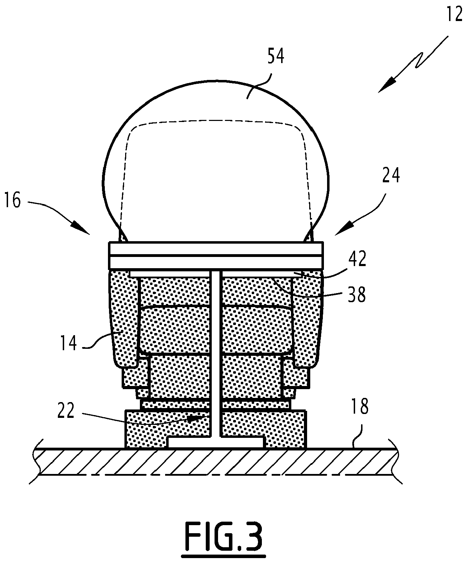

La table 16 comprend ici au moins un pied 22 visible sur la figure 3, et un plateau 24 soutenu par le pied 22.

Le plateau 24 comporte une base 26 et au moins un volet 28, notamment deux volets 28 articulés sur la base 26.

Chaque volet 28 est monté rotatif sur la base 26 autour d'un axe horizontal A-A' représenté sur la figure 1, situé sur un bord longitudinal de la base 26.

Chaque volet 28 est ainsi mobile en rotation par rapport à la base 26, entre une configuration de rangement de la table 16, dans laquelle le volet 28 est en appui sur la base 26, et une configuration d'utilisation de la table 16, dans laquelle au moins un volet 28 est déployé de manière à prolonger longitudinalement par rapport à l'avion la base 26 de la table 16.

Dans la configuration d'utilisation de la table 16, la base 26 présente une surface supérieure 30 et une surface inférieure 32. De même, chaque volet 28 dans la configuration d'utilisation possède une face supérieure 34 et une face inférieure 36. Dans la configuration de rangement de la table 16, la face supérieure 34 de chaque volet 28 fait ainsi face à la surface supérieure 30 de la base 26.

La table 16 définit en outre un logement 38 propre à recevoir le dispositif de sécurité 40 selon l'invention. Dans cet exemple, le logement 38 est situé sous la surface inférieure 32 de la base 26. Le logement 38 est recouvert d'un capot 55. Dans des variantes qui seront décrites plus bas, la position de ce logement 38 est différente.

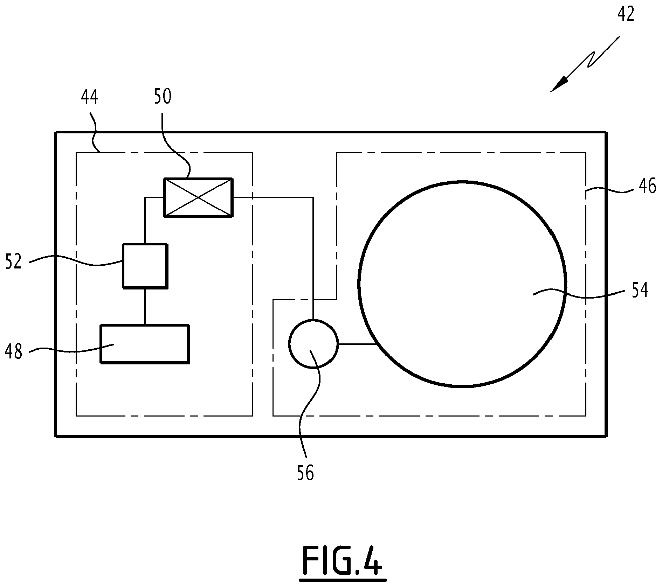

Le dispositif de sécurité 40 selon l'invention comprend au moins un boîtier 42, visible sur la figure 4. Le boîtier 42 contient un système de commande 44 et un ensemble déployable de protection 46 activable par le système de commande 44.

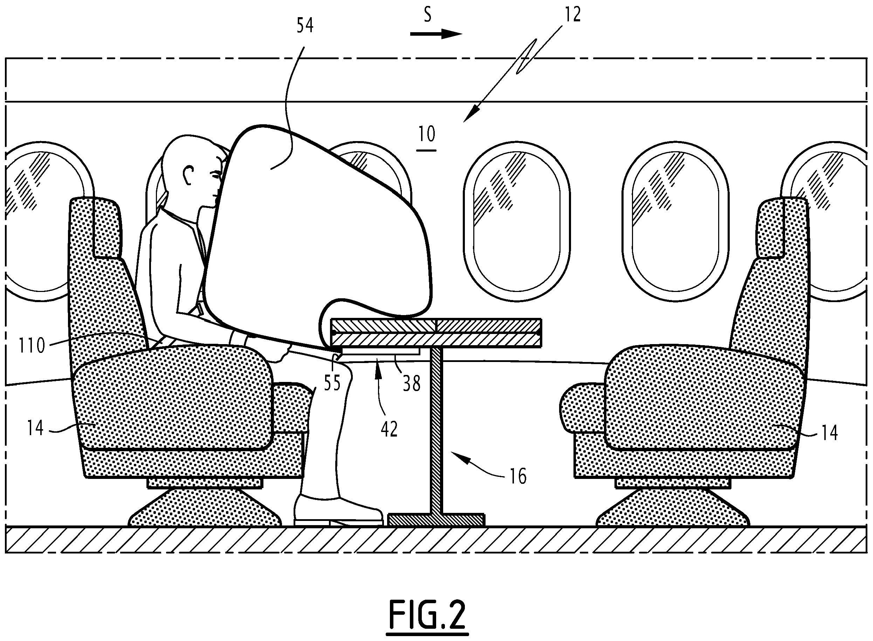

Dans l'exemple représenté sur la figure 2, seul le ou chaque siège 14 orienté dans le sens S est disposé en regard d'un dispositif de sécurité 40 contenant un ensemble déployable de protection 46. Aucun dispositif de sécurité 40 contenant un ensemble déployable de protection 46 n'est disposé en regard des sièges 14 orientés dans le sens opposé au sens S.

Le boîtier 42 est lié au plateau 24 de la table 16 par l'intermédiaire du logement 38 dans lequel il est accueilli.

L'ensemble de protection 46 comprend un coussin gonflable 54 et un système de gonflage 56 du coussin gonflable 54.

Le système de gonflage 56 est propre à faire passer le coussin gonflable 54 d'une configuration rétractée de repos, dans laquelle le coussin gonflable 54 est plié dans le boîtier 42, vers une configuration déployée de sécurité, dans laquelle le coussin gonflable 54 est gonflé par le système de gonflage 56.

Dans la configuration déployée, le coussin gonflable 54 s'étend sur une zone faisant face au passager 20 assis dans le siège 14, comme illustré sur la figure 2. Il s'étend en particulier en regard du plateau 24, au-dessus du plateau 24, et avantageusement sous le plateau 24, en faisant saillie vers le siège 14 à partir de la table 16.

Le système de gonflage 56 comprend avantageusement une pastille pyrotechnique, propre à engendrer un gaz de gonflage du coussin gonflable 54. En variante, le système de gonflage 56 comprend une réserve de gaz pressurisé, propre à remplir le coussin gonflable 54 avec un gaz pressurisé.

Le système de commande 44 comprend un dispositif 48 de détection de décélération longitudinale, une batterie 50 et un processeur 52.

Le dispositif de détection 48 détecte la décélération longitudinale lors d'événements impliquant une décélération significative de l'aéronef 10. Ce dispositif 48 est avantageusement un accéléromètre.

Lors de tels événements, l'aéronef 10 acquiert des valeurs de décélération pouvant aller jusqu'à 16g voire au-delà.

Lorsque la valeur de décélération mesurée par le dispositif 48 dépasse une valeur seuil prédéterminée, par exemple supérieure à 5g, le déploiement des coussins gonflables 54 est effectué.

Ceci assure la sécurité du passager 20 à bord de l'aéronef 10, tout en évitant le déploiement intempestif des coussins gonflables 54 dû à un choc non significatif en deçà du seuil.

Le processeur 52 est propre à recevoir les données de décélération mesurées par le dispositif de détection 48 et à les analyser. Il est propre à comparer les valeurs mesurées par le dispositif de détection 48 avec la valeur seuil de décélération.

Lorsque la décélération de l'aéronef est supérieure à la valeur seuil de décélération, le processeur 52 est propre à activer la batterie 50. La batterie 50 alimente alors le système de gonflage 56 qui remplit de gaz le coussin gonflable 54.

Une fois la commande engendrée par le processeur 52, le déploiement du coussin gonflable 54 par le système de gonflage 56 est très rapide, avec une durée inférieure à la centaine de millisecondes, et notamment compris entre 10 millisecondes et 90 millisecondes.

Le capot 55 du logement 38 est propre à s'ouvrir sous l'effet de la pression exercée par le coussin gonflable 54 sur le capot 55 lors du déploiement du coussin gonflable 54.

Dans cet exemple, et comme représenté sur la figure 4, le boîtier 42 contient tous les éléments du système de commande 44 et de l'ensemble de protection 46, en particulier le dispositif de détection 48, la batterie 50, le processeur 52, le coussin gonflable 54 et le système de gonflage 56.

L'équipement de la cabine 12 d'aéronef 10 avec un dispositif de protection 40 selon l'invention est donc simple à effectuer, et sa maintenance aisée par simple démontage ou remplacement du boîtier 42.

Un procédé de protection d'un passager 20 d'un aéronef 10 dans une cabine 12 selon l'invention, lors d'une forte décélération de l'aéronef, va maintenant être décrit.

Le passager 20 est initialement assis dans un siège 14 de la cabine 12. La table 16 se trouve en configuration de rangement et le coussin gonflable 54 est en configuration rétractée.

Lorsque l'aéronef 10 décélère fortement, lui faisant subir une décélération supérieure à la valeur seuil, le processeur 52 lit et analyse la valeur de décélération mesurée par le dispositif de détection 48. La valeur de décélération étant supérieure à la valeur seuil, le processeur 52 active la batterie 50. La batterie 50 alimente le système de gonflage 56, lequel déploie le coussin gonflable 54.

Le coussin gonflable 54 se gonfle et s'étend alors face au passager 20, en regard du plateau 24, au-dessus du plateau 24 et avantageusement en dessous du plateau 24. Il s'interpose entre la table 16 et le passager 20 pour amortir son mouvement et évite ainsi au passager 20 d'impacter fortement un élément de la table 16.

En effet, si le corps du passager 20 est entraîné en direction de la table 16 suite à la décélération, il entre en contact avec le coussin gonflable 54, plutôt qu'avec la table 16.

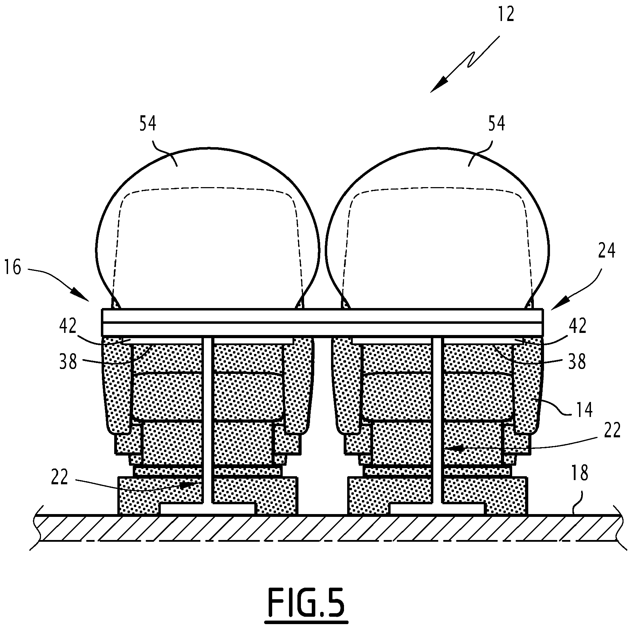

Dans la variante représentée sur la figure 5, deux sièges 14 font face à une table 16. Un boîtier 42 est alors monté en regard de chaque siège 14. La table 16 présente alors au moins deux logements 38 débouchant respectivement en regard de chaque siège 14. Un coussin gonflable 54 est donc propre à se déployer en regard de chaque passager 20 lors d'une décélération trop importante de l'aéronef 10.

Dans une variante (non représentée), le siège 14 est propre à accueillir plusieurs passagers 20 et un unique boîtier 42 est inséré dans la table 16 afin de protéger ces passagers 20 à l'aide d'un seul coussin gonflable 54 s'étendant sur la largeur du siège 14.

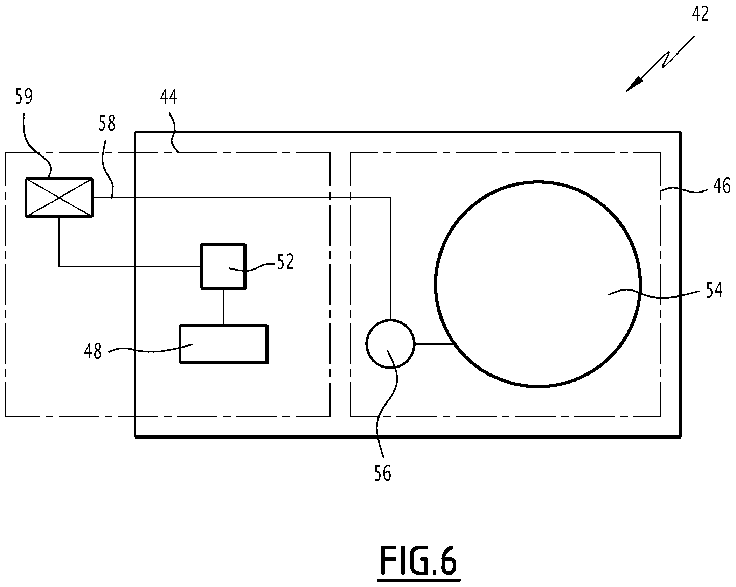

Dans la variante représentée sur la figure 6, le boîtier 42 est alimenté en énergie par l'aéronef 10 via au moins une connexion électrique 58. Dans cet exemple, le boîtier 42 est dépourvu de batterie 50 mais est raccordé à un système d'alimentation électrique 59 de l'aéronef 10.

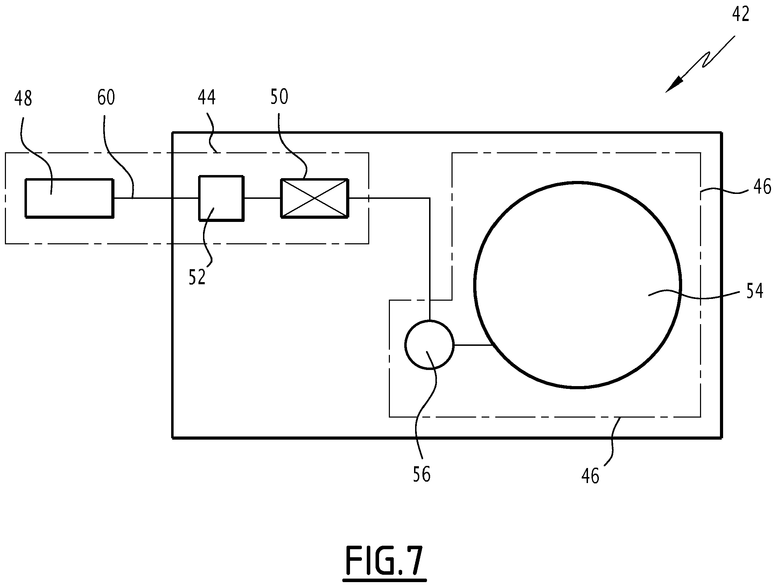

Dans un autre exemple représenté sur la figure 7, le dispositif de détection 48 est placé hors du boîtier 42, dans une partie rigide de l'aéronef 10, tel que le plancher 18. Ainsi, la mesure du dispositif de détection 48 n'est pas faussée par d'éventuelles déformations liées à la décélération. Le dispositif de détection 48 est relié au boîtier 42 par l'intermédiaire d'une connexion 60.

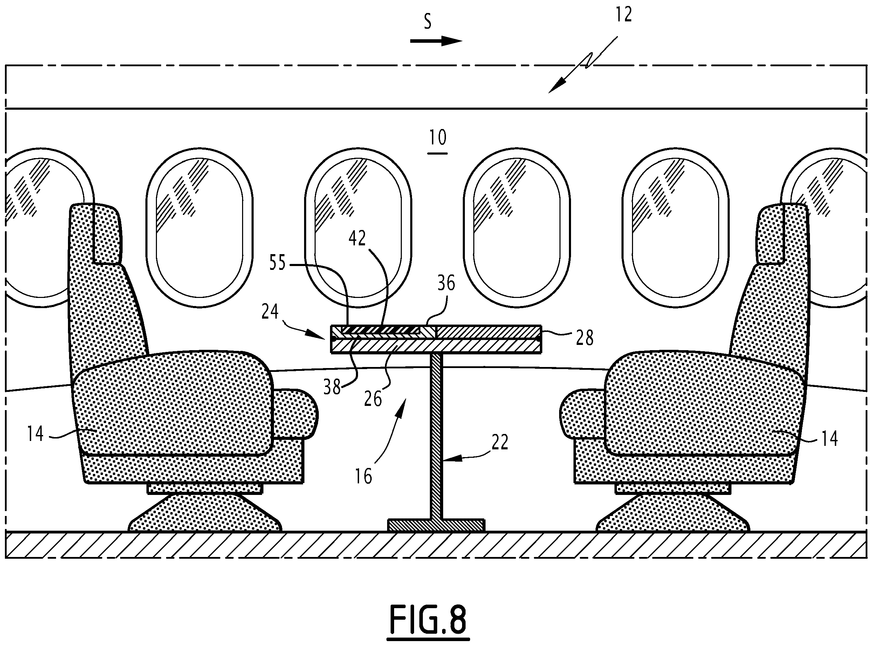

La cabine 12 représentée sur la figure 8 diffère de celle représentée sur la figure 1 en ce que le boîtier 42 est reçu dans un logement 38 ménagé dans l'épaisseur du volet 28 de la table 16. Le capot 55 du logement 38 définit une partie de la surface inférieure 36 du volet 28 dans lequel le logement 38 est ménagé.

Lors du déploiement du coussin gonflable 54, le capot 55 s'ouvre et le coussin gonflable 54 se déploie au-dessus du plateau 24 de la table 16, et vers le passager du siège 14 qu'il protège.

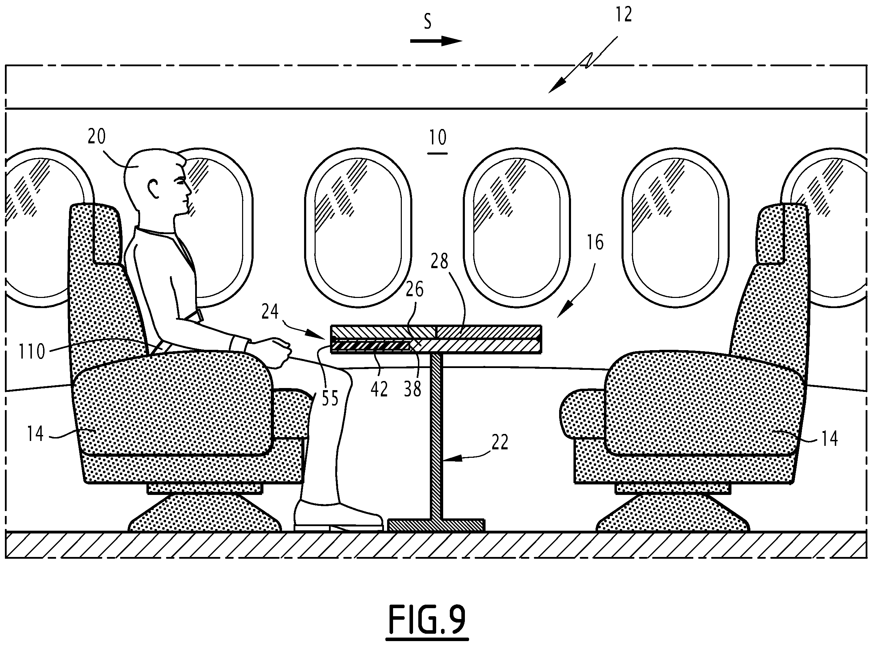

Dans l'exemple représenté sur la figure 9, le boîtier 42 est inséré dans un logement 38 ménagé dans l'épaisseur de la base 26 de la table 16.

Le capot 55 du logement 38 définit une partie de la tranche de la base 26 de la table 16.

Lors du déploiement du coussin gonflable 54, le capot 55 s'ouvre et le coussin gonflable 54 se déploie en-dessous du plateau 24 de la table 16, puis vers le passager du siège 14 qu'il protège, et ensuite au-dessus du plateau 24.

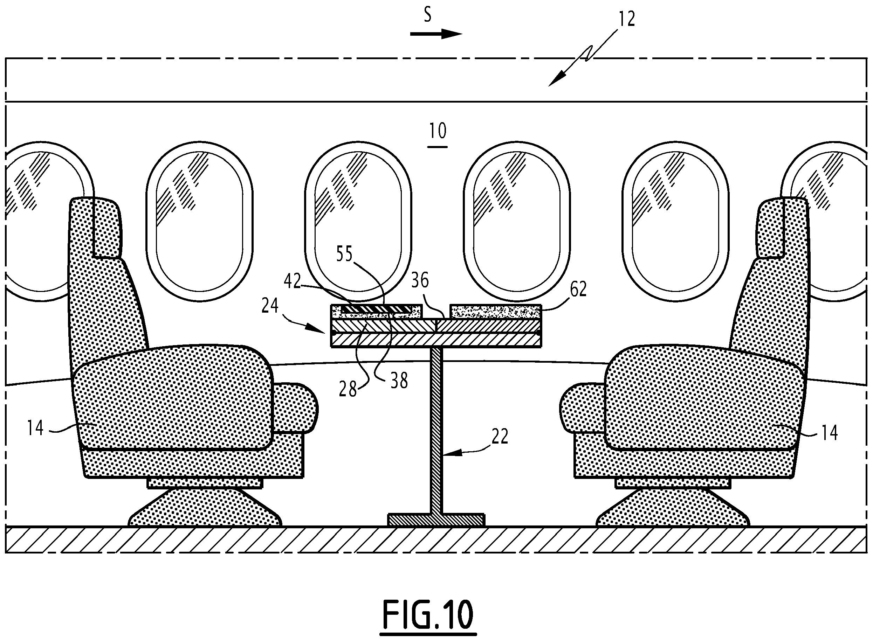

La cabine 12 représentée sur la figure 10 diffère de celle représentée sur la figure 1 en ce que la face inférieure 36 de chaque volet 28 est munie d'un revêtement 62 en mousse.

Le boîtier 42 est inséré dans un logement 38 ménagé dans l'épaisseur du revêtement en mousse 62 d'un volet 28.

Lors du déploiement du coussin gonflable 54, le capot 55 s'ouvre et le coussin gonflable 54 se déploie au-dessus du plateau 24 de la table 16, puis, dans la direction du passager du siège 14 qu'il protège.

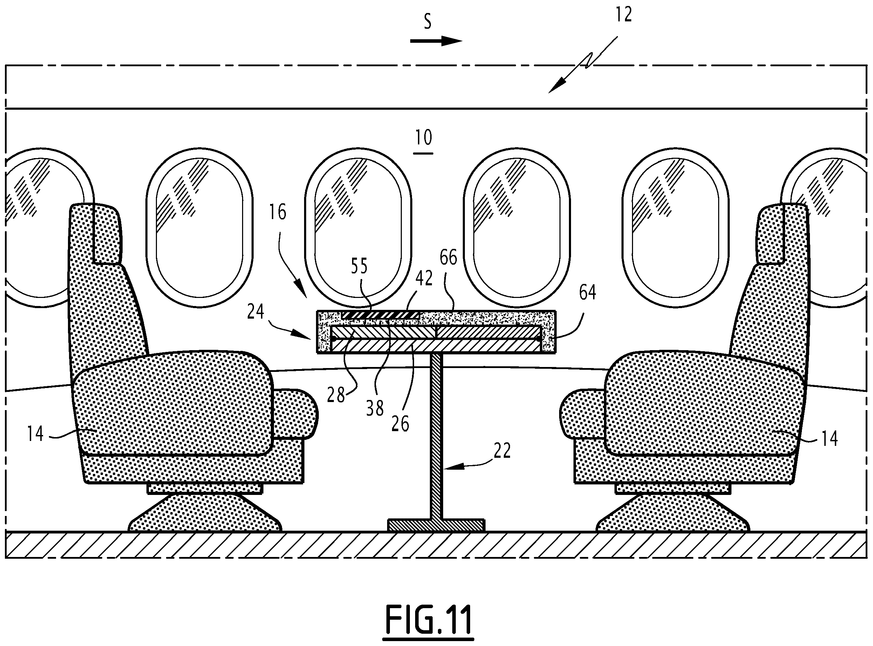

La cabine 12 représentée sur la figure 11 diffère de celle représentée sur la figure 1 en ce que le dispositif de sécurité 40 comporte un matelas de protection 64 amovible propre à être monté sur la table 16.

Un boîtier 42 est inséré dans un logement 38 ménagé dans l'épaisseur du matelas de protection 64.

Le capot 55 du logement 38 définit une partie de la surface supérieure 66 du matelas de protection 64. Lors du déploiement du coussin gonflable 54, le capot 55 s'ouvre et le coussin gonflable 54 se déploie au-dessus du plateau 24 de la table 16, et avantageusement dans la direction du siège 14 qu'il protège.

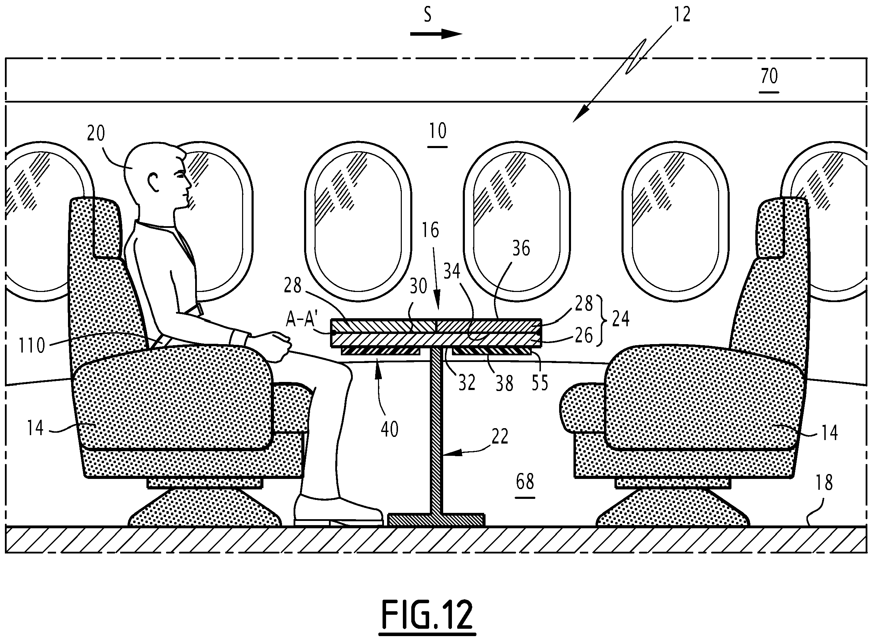

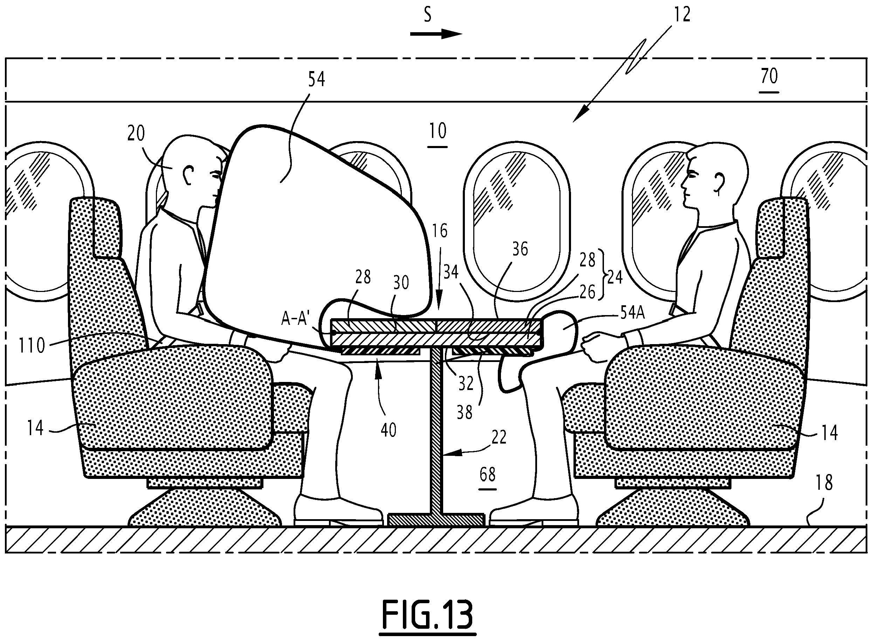

La cabine 12 représentée sur les figures 12 et 13 diffère de celle représentée sur la figure 1 en ce qu'un dispositif de sécurité 40 comportant un boîtier 42 contenant un deuxième coussin gonflable 54A est en outre disposé en regard d'un siège 14 situé dans le sens opposé au sens S.

Dans cet exemple, chaque boîtier 42 est inséré dans un logement 38 ménagé dans chaque volet 28 de la table 16. Dans des variantes non représentées, les boîtiers 42 sont insérés dans des logements 38 ménagés dans la base 26, ou bien dans le revêtement en mousse 62, ou bien dans un matelas de protection 64.

Comme représenté sur la figure 13, lors du déploiement du premier coussin gonflable 54 contenu dans un boîtier faisant face à un siège 14 orienté dans le sens S, le premier coussin gonflable 54 se déploie avantageusement au-dessus du plateau 24 de la table 16, puis dans la direction du torse et du visage du passager 20 situé sur le siège 14 qu'il protège.

En complément, lors du déploiement du deuxième coussin gonflable 54A contenu dans un boîtier 42 faisant face à un siège 14 orienté dans le sens opposé au sens S, le deuxième coussin gonflable 54A se déploie avantageusement sous la table 16, dans la direction des membres inférieurs du passager 20, de manière à éviter le contact de la table 16 avec les membres inférieurs du passager 20, notamment en cas de déformation de la table 16 en conséquence de la forte décélération.

Dans une variante non représentée, au moins un boîtier additionnel 42 est inséré dans un logement 38 ménagé dans la garniture latérale 68 de la cabine 12 (désignée par le terme anglais « sideledge »), dans un panneau latéral de hublot (désigné par le terme anglais « window panel ») et/ou dans le panneau supérieur 70 de la cabine 12 (désigné par le terme anglais « valence panel »). Le coussin gonflable 54 se déploie dans la direction du siège 14 voisin, de manière à protéger le buste et/ou la tête du passager 20 qui occupe le siège 14 en complément du coussin gonflable 54 lié à la table 16.

Grâce à l'invention qui vient d'être décrite, il est possible de disposer d'un aménagement de cabine 12 d'aéronef 10 comportant un dispositif de sécurité 40 protégeant de manière efficace un passager 20 assis à l'intérieur de la cabine 12 sur un siège 14 disposé en regard d'une table 16.

De plus, il est possible de certifier des sièges 14 face à une table 16, les sièges 14 étant munis uniquement des ceintures de sécurité 110 sans brin d'épaule, ce qui améliore le confort du passager sans nuire à sa sécurité.

Cela permet aussi un gain de masse substantiel sur les dossiers des sièges 14 dans le sens S de marche de l'avion, qui ne nécessitent en effet plus d'être renforcés.

Le dispositif de sécurité 40 assure automatiquement la sécurité du passager 20 dans la position haute de la table 16. Cette protection est présente pour toute la durée du vol, sans avoir à effectuer de manipulations complexes et fastidieuses pour l'équipage, tout en minimisant l'espace occupé. Le dispositif de sécurité 40 s'adapte également facilement aux éventuels changements d'architecture de la cabine 12, notamment à l'évolution des sièges 14 de la cabine 12, en vue d'obtenir une certification plus rapide.

Comme cela est visible sur les figures, dans la cabine 12, la table 16 est une table à manger et/ou à travailler (désignée par le terme anglais « dining table »), qui est maintenue en permanence dans un plan parallèle à un plancher de la cabine, contrairement à une tablette (désignée par le terme anglais « tray table ») montée pivotante à l'arrière d'un siège. Une tablette ne peut pas être utilisée en permanence, puisqu'elle doit être rangée en position verticale contre l'arrière d'un siège lors des phases de roulage, décollage et atterrissage de l'avion (« TTOL : Taxi Take Off Landing » en anglais)

Avantageusement, la table est maintenue en position haute, dans un plan parallèle à un plancher de la cabine, durant toute la durée du vol, en particulier durant les phases de roulage, décollage et atterrissage de l'avion (« TTOL : Taxi Take Off Landing » en anglais). Cette table est donc apte à être utilisée dans toutes les phases de vol, tout en assurant la sécurité des passagers sans modification de sa configuration pour les phases de roulage, décollage et atterrissage de l'avion.

Comme visible notamment sur les figures 1 à 5 et 8 à 13, la table 16 présente un plateau 24 qui comporte une base 26 s'étendant en permanence dans un plan parallèle à un plancher 18 de la cabine, le plan de la base 26 étant horizontal lorsque l'axe longitudinal de l'aéronef 10 est horizontal.

Dans la position haute représentée sur ces figures, la base 26 du plateau 24 s'étend au-dessus et à l'écart du plancher 18 de la cabine.

Dans l'exemple représenté sur les figures précédentes, le plateau 24 de la table 16 est soutenu par au moins un pied 22.

Dans une variante (non représentée), le plateau 24 de la table 16 est maintenu en position haute par sa fixation sur une garniture latérale de la cabine 12 s'étendant le long du fuselage.

## Revendications

1. Cabine (12) d'aéronef (10) comprenant :
- au moins un siège (14) propre à recevoir au moins un passager (20) ;
- au moins une table (16) disposée en regard du siège (14) ;
- un dispositif de sécurité (40) propre à être monté sur la table (16), sous la table (16) ou reçu dans la table (16),
**caractérisé en ce que** le dispositif de sécurité (40) comporte :
- au moins un ensemble déployable de protection (46) comportant un coussin gonflable (54) déployable depuis une configuration rétractée de repos vers une configuration déployée de sécurité du ou de chaque passager (20) assis sur le siège (14), et
- un système de commande (44) du déploiement du ou de chaque coussin gonflable (54), propre à déclencher le déploiement du coussin gonflable (54) au-delà d'une valeur seuil de décélération de l'aéronef (10).

2. Cabine (12) d'aéronef (10) selon la revendication 1, dans laquelle la table (16) comporte un plateau (24), l'ensemble déployable de protection (46) étant propre à être monté sur le plateau (24) ou reçu dans le plateau (24).

3. Cabine (12) d'aéronef (10) selon la revendication 2, dans laquelle au moins un ensemble déployable de protection (46) est reçu dans l'épaisseur du plateau (24) de la table (16).

4. Cabine (12) d'aéronef (10) selon la revendication 2 ou 3, dans laquelle au moins un ensemble déployable de protection (46) est monté sous le plateau (24) de la table (16).

5. Cabine (12) d'aéronef (10) selon l'une quelconque des revendications 2 à 4, dans laquelle le plateau (24) comprend une base (26) et au moins un volet (28) mobile par rapport à la base (26) entre une configuration de rangement dans laquelle le volet (28) est replié sur la base (26) et une configuration d'utilisation dans laquelle le volet (28) est déployé dans le prolongement de la base (26).

6. Cabine (12) d'aéronef (10) selon la revendication 5, dans laquelle au moins un ensemble déployable de protection (46) est reçu dans l'épaisseur du volet (28) de la table (16).

7. Cabine (12) d'aéronef (10) selon la revendication 5 ou 6, dans laquelle le volet (28) comprend un revêtement en mousse (62) fixé sur le volet (28), au moins un ensemble déployable de protection (46) étant reçu dans le revêtement en mousse (62).

8. Cabine (12) d'aéronef (10) selon l'une quelconque des revendications précédentes, dans laquelle le dispositif de sécurité (40) comporte un matelas de protection (64) amovible propre à être monté sur la table (16), au moins un ensemble déployable de protection (46) étant reçu dans le matelas de protection (64).

9. Cabine (12) d'aéronef (10) selon l'une quelconque des revendications précédentes, comprenant un premier siège (14) orienté dans un sens normal (S) de déplacement de l'aéronef (10), et un premier ensemble déployable de protection (46) monté face au premier siège (14), le premier ensemble déployable de protection (46) comprenant un premier coussin gonflable (54) se déployant au-dessus de la table (16) pour protéger le torse et la tête d'un passager assis dans le premier siège (14), la cabine comprenant un deuxième siège (14) orienté dans un sens opposé au sens normal (S) de déplacement de l'aéronef (10) et un deuxième ensemble déployable de protection (46) monté face au deuxième siège (14), le deuxième ensemble déployable de protection (46) comprenant un deuxième coussin gonflable (54A) se déployant en-dessous de la table (16) pour protéger les membres inférieurs d'un passager assis sur le deuxième siège (14).

10. Cabine (12) d'aéronef (10) selon l'une quelconque des revendications précédentes, dans laquelle la table (16) définit ou porte un logement (38) de réception du dispositif de sécurité (40) et comporte un capot (55) de fermeture du logement (38) définissant une partie d'une surface extérieure de la table (16).

11. Cabine (12) d'aéronef (10) selon l'une quelconque des revendications précédentes, dans laquelle le dispositif de sécurité (40) comporte un boîtier (42) recevant le coussin gonflable (54) et un système de gonflage (56) du coussin gonflable (54).

12. Cabine (12) d'aéronef (10) selon la revendication 11, dans laquelle le système de commande (44) comporte une batterie (50) propre à alimenter électriquement le système de gonflage (56) ou dans laquelle le système de commande (44) comporte une connexion électrique d'alimentation (58) reliée à un système d'alimentation électrique de l'aéronef (10) et au système de gonflage (56).

13. Cabine (12) d'aéronef (10) selon la revendication 11 ou 12, dans laquelle le système de commande (44) du déploiement du coussin gonflable (54) est reçu dans le boîtier (42).

14. Cabine (12) d'aéronef (10) selon l'une quelconque des revendications précédentes, dans laquelle le système de commande (44) comporte un dispositif de détection (48) de décélération et un processeur (52) propre à analyser des mesures de décélération prises par le dispositif de détection (48) pour activer le déploiement du coussin gonflable (54) lorsque la décélération mesurée par le dispositif de détection (48) est supérieure à la valeur seuil.

15. Procédé de protection d'un passager (20) d'un aéronef (10) comprenant les étapes suivantes :
- installation d'au moins un passager dans un siège (14) d'une cabine (12) d'aéronef (10) selon l'une quelconque des revendications précédentes ;
- détection par le système de commande (44) d'une décélération de l'aéronef (10) dépassant une valeur seuil de décélération ;
- déploiement du ou de chaque coussin gonflable (54) dans l'espace en regard du ou de chaque passager (20), entre le siège (14) et la table (16).
